# EUROPÄISCHE PATENTSCHRIFT

(11) **EP 3 191 771 B1**
(45) Veröffentlichungstag und Bekanntmachung des Hinweises auf die Patenterteilung: **09.10.2019**
(21) Anmeldenummer: 15790025.9
(22) Anmeldetag: 14.09.2015
(51) Int. Cl.: F24S 20/62, F24S 25/632, F24S 25/634, F24S 25/70, F24S 30/42

(54) **HALTEVORRICHTUNG FÜR EIN SOLARMODUL AN EINER BRÜSTUNG EINES BALKONS**
HOLDING DEVICE FOR A SOLAR PANEL ON A PARAPET OF A BALCONY
DISPOSITIF DE MAINTIEN POUR MODULE SOLAIRE PLACÉ SUR UNE BALUSTRADE DE BALCON

(30) Priorität: 12.09.2014 DE 102014113216
(43) Veröffentlichungstag der Anmeldung: 19.07.2017
(73) Patentinhaber: Indielux UG (Haftungsbeschränkt), 10997 Berlin (DE)
(72) Erfinder: VIETZKE, Marcus, 12059 Berlin (DE); FRIEDRICH, Fabian, 10551 Berlin (DE)
(74) Vertreter: Schulz Junghans Patentanwälte PartGmbB
(86) Internationale Anmeldenummer: PCT/DE2015/100390
(87) Internationale Veröffentlichungsnummer: WO 2016/037613

(56) Entgegenhaltungen:
- AT-B- 390 824
- DE-U-202011 102 615
- DE-U1- 7 708 860
- DE-U1-202010 008 495
- JP-A- 2006 128 573
- US-A1- 2014 096 463

## Beschreibung

Die vorliegende Erfindung befasst sich mit einer Haltevorrichtung für ein Solarmodul an einer Brüstung eines Balkons sowie mit einem Solarmodul mit Haltevorrichtung. Eine solche Haltevorrichtung ist zum Beispiel von der JP-2006128573 A bekannt.

Mit den zunehmend preiswerteren und effizienteren Solarmodulen, insbesondere Photovoltaik-Elementen, nimmt der Wunsch zu, ein Solarmodul für den Heimbedarf zu nutzen. Allerdings wohnen gerade in Städten nur wenige Menschen in Einzel-Häusern mit eigener Dachfläche und sind zudem häufig Mieter, die keine Baumaßnahmen an dem Mietobjekt vornehmen wollen und bei einem Umzug das Solarmodul mitnehmen wollen. Als ein möglicher Anbringungsort hat sich der Balkon, beziehungsweise dessen Brüstung, herausgestellt. Nachteilig ist hierbei, dass die Brüstungen sehr unterschiedliche Abmessungen aufweisen. Zugleich muss aber eine sichere Befestigung ermöglicht werden, die möglichst ohne Baumaßnahmen vorgenommen werden muss. Die hier geschilderten Probleme aus dem vorbekannten Stand der Technik werden mit der im Folgenden beschriebenen Erfindung zumindest teilweise gelöst. Die erfindungsgemäßen Merkmale ergeben sich aus den unabhängigen Ansprüchen, zu denen vorteilhafte Ausgestaltungen in den abhängigen Ansprüchen aufgezeigt werden. Die Merkmale der Ansprüche können in jeglicher technisch sinnvollen Art und Weise kombiniert werden, wobei hierzu auch die Erläuterungen aus der nachfolgenden Beschreibung sowie Merkmale aus den Figuren hinzugezogen werden können, die ergänzende Ausgestaltungen der Erfindung umfassen.

Die Erfindung betrifft eine Haltevorrichtung für ein Solarmodul an einer Brüstung eines Balkons, welche zumindest die folgenden Komponenten aufweist:
- eine Anbindungseinrichtung zum Anbinden eines zu haltenden Elements, wobei die Anbindungseinrichtung zumindest ein Auflager zur Anlage an einer Brüstung aufweist; und
- zwei Querstreben zum Überbrücken einer Brüstungsbreite, wobei die zwei Querstreben mit der Anbindungseinrichtung verbunden sind und jeweils einen Flansch zur Anlage an einer Brüstung aufweisen, wobei mittels einer Bewegung des jeweiligen Flanschs hin zur Anbindungseinrichtung der jeweilige Flansch und das zumindest eine Auflager einander entgegengesetzt gegen die Brüstung drücken, wobei die zwei Querstreben um jeweils eine zur Brüstungsebene einer Brüstung parallele Achse schwenkbar sind, wobei die parallelen Achsen zueinander lateral beabstandet sind.

Die Haltevorrichtung ist dazu eingerichtet, ein zu haltendes Element, insbesondere ein Solarmodul, wie ein Photovoltaik-Element oder ein Solarthermie-Element, einen Satellitensignalempfänger, einen Sonnenschirm, eine Werbetafel oder einen Tisch an einer Brüstung, bevorzugt eines Balkons, dauerhaft oder zeitweise zu befestigen. Eine Brüstung ist hierbei zum Beispiel eine Mauer, ein Geländer, eine Balustrade, ein mit Plattenelementen oder Fassadenelementen verdecktes Geländer oder ähnliches, das durchbrochen und/oder massiv ist. Vorteilhaft an dieser Haltevorrichtung ist, dass sie zum einen ohne Baumaßnahmen, wie zum Beispiel Bohren, und somit zerstörungsfrei und bevorzugt ohne besondere handwerkliche Fertigkeiten an einer Brüstung befestigbar ist. Darüber hinaus hat die Haltevorrichtung den Vorteil, dass sie auch leicht wieder abnehmbar ist.

Zunächst ist eine Anbindungseinrichtung vorgesehen, an der ein zu haltendes Element fest montierbar ist, oder die einstückig mit dem zu haltenden Element gebildet ist. Die Anbindungseinrichtung weist also gemäß der jeweiligen Ausführungsform geeignete Trageelemente und Befestigungseinrichtungen auf, wie zum Beispiel Hakenlaschen, Modulklemmen und/oder Gewindelöcher.

Weiterhin ist ein Paar Querstreben, vorgesehen, welcher eine ausreichende Länge für die meisten üblichen Brüstungen aufweist. Beispielsweise ist eine Brüstungsbreite von 1 cm [Zentimeter] bis zu 40 cm, bevorzugt von 4 cm bis zu 30 cm überbrückbar. Die Querstreben sind dabei derart bewegbar, dass die Überbrückungslänge an die jeweilige Brüstung (möglichst exakt) anpassbar ist. Die Querstreben sind dabei bevorzugt derart eingerichtet, dass das Gesamtgewicht aus der Haltevorrichtung und dem zu haltenden Element über die Querstrebe in die Brüstung, vorteilhafterweise senkrecht, eingeleitet wird. Die Querstreben sind dann das Haupttrageelement der Haltevorrichtung. Zusätzlich sind Flansche vorgesehen, die das Gesamtgewicht in die Brüstung einleiten. In einer weiteren Ausführungsform wird zumindest ein Teil des Gesamtgewichts reibschlüssig mittels der Flansche und dem zumindest einen Auflager in die Brüstung eingeleitet. Das zumindest eine Auflager ist in einer Ausführungsform als punktuelle beziehungsweise kleinflächige Anlagefläche gebildet, bevorzugt mit einem Schoner. In einer anderen Ausführungsform wird die Mimik für die Bewegung der Flansche, welche sich bevorzugt stangenförmig beziehungsweise rohrförmig über einen Großteil des zu haltenden Elements erstrecken, zugleich als Auflager genutzt. Ganz besonders bevorzugt wird ein Rahmenelement mit senkrechter Haupterstreckung als Auflager genutzt. Bei einem großflächigen Auflager sind bevorzugt eine Mehrzahl von Anlagestellen, insbesondere zwei pro Auflager gebildet. Es können aber auch zusätzliche Auflager an der Anbindungseinrichtung vorgesehen sein.

Zum Aufbringen einer Haltekraft zur Sicherung, zum Beispiel gegen Windlasten, und je nach Ausführungsform zusätzlich zur reibschlüssigen Einleitung des Gesamtgewichts ist die Paarung aus einem Flansch und zumindest einem Auflager vorgesehen. Der jeweilige Flansch ist mittels der Bewegung der Querstrebe mit der Brüstung zur Anlage bringbar, wodurch wiederum das zumindest eine Auflager auf der gegenüberliegenden Seite der Brüstung zur Anlage gebracht wird. Somit wird eine Klemmkraft auf die Brüstung aufgebracht, die das zu haltende Element an der Brüstung sichert beziehungsweise gegebenenfalls zusätzlich trägt. Mit anderen Worten ist der jeweilige Flansch mittels einer Bewegung der zumindest einen zugehörigen Querstrebe hin zur Anbindungseinrichtung mit der Brüstung in kraftübertragenden Kontakt bringbar, wobei das zumindest eine Auflager der Anbindungseinrichtung mit der Brüstung ein Gegenlager zu dem jeweiligen Flansch bildet und dem Flansch gegenüberliegend einen kraftübertragenden Kontakt zur Brüstung bildet.

In einer weiteren Ausführungsform ist der Flansch relativ zur Querstrebe klappbar und wird mittels einer Gewindestange mit der Anbindungseinrichtung verbunden, sodass mittels eines Anziehens der Schraube, der Flansch gegen die Brüstung gezogen wird. Für eine Ausführung für massive beziehungsweise verdeckte Brüstungen ist die Gewindestange bei der Endmontage oberhalb der Brüstung anzuordnen.

Die Haltevorrichtung ist somit nicht nur zerstörungsfrei und ohne handwerkliche Maßnahmen montierbar, sondern darüber hinaus für viele unterschiedliche Abmessungen und Formen von Brüstungen anwendbar.

Gemäß der Erfindung sind die Querstreben um jeweils eine zur Brüstungsebene einer Brüstung parallele Achse schwenkbar, und bevorzugt ist mittels des jeweiligen Flanschs im Zusammenwirken mit dem zumindest einen Auflager eine Klemmkraft auf die Brüstung aufbringbar.

Der jeweilige Flansch wird mittels der zugehörigen Querstrebe hin zur Anbindungseinrichtung geschwenkt, um die Haltevorrichtung an der Brüstung zu befestigen. Diese Vorrichtung weist einen sehr stabilen Aufbau der Querstrebe auf und ist einfach in der Handhabung. Zudem lässt sich diese Vorrichtung kostengünstig fertigen. Die Querstreben sind hierbei bevorzugt zur Mitte der Anbindungseinrichtung hin schwenkbar. In einer anderen Ausführungsform werden die Querstreben nach außen verschwenkt, wobei hier eine Bauform mit besonders geringer Gesamttiefe erreichbar ist. Bevorzugt sind die Querstreben um eine Achse entlang des Schwerefelds der Erde ausgerichtet.

In einer bevorzugten Ausführungsform sind die Querstreben verdrehfest mit einem Stellkolben verbunden, wobei der Stellkolben relativ zu der Anbindungseinrichtung um eine Hochachse verdrehbar ist. Der Stellkolben weist dabei bevorzugt ein, bevorzugt stiftförmiges, Führungselement auf, das mittels einer Drehführungsbahn führbar ist. Die Drehführungsbahn verläuft bevorzugt über einen Winkelbereich von zumindest 45°, bevorzugt bis zu 90°. Für eine Abdeckung der meisten Breiten von Brüstungen ist ein Winkelbereich von 85° bevorzugt, und wobei sich die Drehführungsbahn zugleich entlang der Hochachse erstreckt. Der Stellkolben, und damit die verdrehfest verbundene Querstrebe, wird damit bei einer Höhenverstellung des Stellkolbens um die Hochachse verdreht. Die Höhenverstellung ist beispielsweise mittels einer Gewindestange oder einer Schraube möglich.

Gemäß einer weiteren vorteilhaften Ausführungsform der oben beschriebenen Haltevorrichtung sind zum Schwenken der zumindest einen Querstrebe je Querstrebe zumindest die folgenden Komponenten vorgesehen:
- ein Führungszylinder konzentrisch zu der Achse und mit einer Drehführungsbahn, wobei sich die Drehführungsbahn über einen Winkelbereich von 45° bis 90°, bevorzugt 85°, und über einen Längsabschnitt axial erstreckt, wobei die zugehörige Querstrebe mit dem Führungszylinder drehfest verbunden ist;
- eine Längsführungsbahn, welche in der Anbindungseinrichtung gebildet ist, wobei sich die Längsführungsbahn über den Längsabschnitt axial erstreckt;
- ein Stellkolben mit einem Führungselement, wobei sich das Führungselement in die Drehführungsbahn und in die Längsführungsbahn erstreckt und so eine Bewegung des Stellkolbens beschränkt,
wobei mittels einer axialen Bewegung des Stellkolbens der Führungszylinder relativ zur Anbindungseinrichtung verdrehbar ist.

Der hier verwendete Führungszylinder ist verdrehbar mit der Anbindungseinrichtung verbunden und bewegt bei einer Verdrehung relativ zur Anbindungseinrichtung die Querstrebe mit dem Flansch hin zur Anbindungseinrichtung, sodass mittels des Flanschs und des zumindest einen Auflagers eine Klemmkraft auf die Brüstung einleitbar ist. Der Führungszylinder weist hierzu eine Drehführungsbahn auf, sodass sich der Führungszylinder verdreht, wenn das Führungselement axial bewegt wird. Das Führungselement ist hierzu in dem oder um den im Führungszylinder angeordneten Stellkolben befestigt, wobei das Führungselement über die Längsführbahn in der Anbindungseinrichtung an einem Verdrehen relativ zur Anbindungseinrichtung gehindert wird. Die Längsführungsbahn überlappt sich dabei mit der Drehführungsbahn, beziehungsweise ist bevorzugt mit der axialen Erstreckung in Deckung, sodass die maximale Verdrehung erreichbar ist und bevorzugt ein Überdrehen durch den axialen Anschlag verhindert ist. Die Längsführungsbahn ist in einer Ausführungsform entgegen der Neigung der Drehführungsbahn geneigt, wobei bevorzugt der relative Winkel zwischen der Drehführungsbahn und der Längsführungsbahn nicht größer als 45° ist und zudem bevorzugt in einer Vormontagestellung (keine Klemmung) der Querstrebe eine nach oben gerichtete V-Form bildet.

Eine solche Ausführungsform ist besonders robust und leicht zu handhaben. Darüber hinaus sind die Elemente zum Verdrehen selbsthemmend und somit selbstsichernd ausführbar.

Gemäß einer weiteren vorteilhaften Ausführungsform der oben beschriebenen Haltevorrichtung ist im Führungszylinder eine Gewindestange angeordnet und der Stellkolben weist ein Innengewinde auf und mittels Verdrehens der Gewindestange ist der Stellkolben axial verschiebbar.

Die hier vorgeschlagene Ausführungsform ermöglicht eine einfache Handhabung der Anpassung der Lage des jeweiligen Flanschs an die jeweilige Brüstung. Beispielsweise ist an der Gewindestange ein Drehknauf vorgesehen, der das Verdrehen ohne Werkzeug ermöglicht. Diese Ausführungsform ist somit vollständig ohne Werkzeug montierbar. Darüber hinaus ist das Gewinde derart einrichtbar, dass der Stellkolben in einer eingestellten Position selbsthemmend arretiert ist. Gemäß einem weiteren Aspekt ist die Haltevorrichtung in dieser Ausführungsform für einen Transport besonders flach einstellbar, sodass die Haltevorrichtung kostengünstig transportierbar ist. Gemäß einer weiteren vorteilhaften Ausführungsform der oben beschriebenen Haltevorrichtung sind zum Schwenken der Querstreben je Querstrebe zumindest die folgenden Komponenten vorgesehen:
- ein erstes Rampenelement an der Anbindungseinrichtung;
- eine Führungsstange konzentrisch zu der Achse, wobei die Führungsstange drehfest mit der Querstrebe verbunden ist;
- ein mit dem ersten Rampenelement korrespondierendes zweites Rampenelement, wobei das zweite Rampenelement drehfest mit der Führungsstange verbunden ist und wobei das erste Rampenelement und das zweite Rampenelement eine aufeinanderliegende Rampenpaarung bilden, wobei mittels einer axialen Relativbewegung zwischen dem ersten Rampenelement und dem zweiten Rampenelement die Führungsstange um die Achse mittels der aufeinanderliegenden Rampenpaarung verdrehbar ist, wobei die axiale Relativbewegung bevorzugt beim Anbringen an einer Brüstung mittels einer Gewichtskraft des Anbindungselements und/oder des zu haltenden Elements ausgelöst wird.

Bei dieser alternativen Ausführungsform zur Umsetzung der Schwenkbewegung der Querstreben wird eine Rampenpaarung genutzt, wobei bevorzugt eine der beiden Rampen mit einer Vorspannung, zum Beispiel mittels einer Feder, oder mittels einer Schraubverbindung axial bewegbar ist. Die axiale Relativbewegung wird in eine Verschwenkbewegung der Querstrebe relativ zur Anbindungseinrichtung übersetzt. In einer bevorzugten Ausführungsform wird die Gewichtskraft der Anbindungseinrichtung und/oder des zu haltenden Elements genutzt. Vorteilhafterweise beim Auflegen der Querstreben auf einer Brüstung wird infolge der nun einwirkenden Gewichtskraft eine axiale Relativbewegung zwischen dem ersten Rampenelement (axial mit der Anbindungseinrichtung fixiert) und dem zweiten Rampenelement (axial mit der zugehörigen Querstrebe fixiert) ausgelöst, die infolge der aufeinanderliegenden Rampen in eine Verdrehung der zugehörigen Querstrebe übersetzt wird. Auch diese Ausführungsform benötigt keine Werkzeuge zur Montage und ist zudem platzsparend transprotierbar.

Gemäß einer weiteren vorteilhaften Ausführungsform der Haltevorrichtung, sind die Querstreben mittels einer Zahnradverzahnung im Zusammenspiel mit einer Gewindeschnecke verschwenkbar.

Gemäß dieser Ausführungsform wird ein Verdrehen der Querstreben mittels einer Zahnradverzahnung, beispielsweise um eine Haltestange beziehungsweise ein Halterohr der Anbindungseinrichtung, mit welcher die Querstreben verdrehfest befestigt sind, verschwenkt. In die Zahnradverzahnung greift eine Gewindeschnecke ein. Die Gewindeschnecke ist beispielsweise mittels einer Schraube, bevorzugt einer platzsparenden Madenschraube ausgeführt. Bevorzugt wird dabei eine Selbsthemmung erreicht. Die Zahnradverzahnung ist dabei bevorzugt nicht umlaufend gestaltet, sondern nur für den erwünschten Schwenkwinkel, und eventuell zusätzlich für ein platzsparendes Verstauen, eingerichtet.

Gemäß einer weiteren vorteilhaften Ausführungsform der oben beschriebenen Haltevorrichtung weisen die Querstreben zumindest eine der folgenden Eigenschaften auf, mittels derer die Querstreben eine veränderbare Länge aufweisen:
- eine längenjustierbare Schiebeverbindung zwischen einem ersten Querstrebenabschnitt und einem zweiten Querstrebenabschnitt;
- eine um eine Querachse, welche zu einer Brüstung parallel ausgerichtet ist, mehrfach klappbare mehrteilige Querstrebe;
- eine Querstrebe als Kette, die nach Längenbedarf ausziehbar und zu der Anbindungseinrichtung arretierbar ist; und
- ein Parallelogramm (53) aus einer ersten Parallelstrebe (54) und einer zweiten Parallelstrebe (55), die um eine Querachse (34), welche zu einer Brüstung (3) parallel ausgerichtet ist, parallel verschwenkbar sind.

Die Schiebeverbindung ist besonders vorteilhaft mittels einer Teleskopanordnung des ersten Querstrebenabschnitts und des zweiten Querstrebenabschnitts gebildet. Die Längenanpassung ist dabei diskret über zum Beispiel Raststufen oder stufenlos zum Beispiel mittels einer Verschraubung ausführbar. Auch hierbei ist eine Ausführungsform ohne notwendigen Werkzeugeinsatz bevorzugt, zum Beispiel mittels eines von Hand zurückstellbaren vorgespannten Rastelements beziehungsweise mittels eines Schraubknaufs.

Die mehrfach klappbare Querstrebe weist eine Mehrzahl von Klappgliedern auf, von denen diejenigen, welche sich über eine jeweilige Brüstung hinaus erstrecken, gegen die Brüstungsinnenseite klappbar sind. Die Klappbewegung ist dabei in einer bevorzugten Ausführungsform um eine senkrechte Hochachse zur Brüstungsebene und der Flansch ist nach unten ausgerichtet angeschlossen. In einer anderen bevorzugten Ausführungsform ist die mehrfachklappbare Querstrebe um eine waagerechte Achse klappbar und das zumindest eine überstehende Klappglied bildet den Flansch. Auch bei dieser Version ist eine Ausführung ohne Werkzeug möglich. Bevorzugt weisen die Gelenke zumindest zwei Rastpositionen auf, die die Ausrichtung der Klappglieder in der gestreckten Position beziehungsweise in der geklappten Position sichern.

Die Kettenform der zumindest einen Querstrebe ist bevorzugt in einem Element der Anbindungseinrichtung, bevorzugt in einem Rahmen, verstaubar. Für eine Anpassung der Länge der Querstrebe wird die Kette herausgezogen und der Flansch zur Anlage gebracht. Besonders bevorzugt sind die Kettenelemente in Querschnitt eckig, bevorzugt rechteckig, ausgeführt und das Aufnahmeelement umschließt die Kette mit einer korrespondierenden eckigen Form. Damit wird ein Seitenführungseffekt erreicht, welcher der Konstruktion eine ausreichende Querstabilität verleiht, sodass kein zusätzliches Sicherungselement gegen Querkraftbelastungen vorgesehen werden muss. Bevorzugt werden die Kettenglieder über eine Schiene mittels eines Stifts geführt, wobei der Stift zugleich der Kettenbolzen zwischen zwei Kettengliedern ist. Wird die Kette ausgezogen, wird der Stift entweder entfernt oder ist als vorgespanntes Element entlang der Stiftachse zurückbewegbar. Somit wird zugleich die Lage der letzten Kettengliedverbindung in der Schiene gesichert. Alternativ oder zusätzlich ist auf der Oberseite eines einzigen, bevorzugt eines jeweiligen, Kettenglieds eine Rastmarke vorgesehen, die bei Aufbringung einer Kraft, bevorzugt einer Gewichtskraft, mit dem Auslass für die verstaute Kette in Eingriff bringbar ist und so die eingestellte Länge der Querstrebe sichert. In einer Ausführungsform wird der Flansch seitlich gegen die Brüstung gedrückt, wobei bevorzugt weiterhin ein Einstellelement vorgesehen ist, mittels welchem eine Anpassung für eine Längendifferenz von zum Beispiel maximal einer halben Kettengliedlänge ausgleichbar ist. Alternativ wird der Flansch nach unten gespannt, sodass die notwendige Klemmkraft aus der Umlenkung der Kette erzeugt wird. Die Kette setzt sich in einer Ausführungsform aus unterschiedlichen Einzelgliedern zusammen, bevorzugt aus Außengliedern und Innengliedern, welche einander abwechseln. Dadurch wird eine besonders hohe Stabilität erreicht.

Bei der Ausführung mit einem Parallelogramm werden die Parallelstreben bevorzugt mittels einer Gewindestange verschwenkt, wobei die Gewindestange den Flansch oder gegebenenfalls ein Gelenk am Übergang zum Flansch mit der Anbindungseinrichtung derart verbindet, dass mittels eines Verdrehens der Gewindestange, der Flansch mit der Brüstung zur Anlage bringbar ist. Die Querachse ist hierbei bevorzugt in der Endmontageposition horizontal ausgerichtet, sodass die Haltevorrichtung wenig Bauhöhe aufweist. Sie ist aber auch vertikal oder an einer dazwischenliegenden Winkelausrichtung ausrichtbar.

Gemäß einer weiteren vorteilhaften Ausführungsform der oben beschriebenen Haltevorrichtung setzen die Querstreben sich zweiteilig aus einer ersten Strebe und einer zweiten Strebe gelenkig zusammen, wobei ein erstes Gelenk der ersten Strebe und ein drittes Gelenk der zweiten Strebe mit der Anbindungseinrichtung verbindbar ist und wobei ein zweites Gelenk mit dem jeweiligen Flansch verbindbar ist, wobei das zweite Gelenk mittels Verändern eines Abstands zwischen dem ersten Gelenk und dem dritten Gelenk relativ zur Anbindungseinrichtung bewegbar ist, wobei bevorzugt das dritte Gelenk mittels einer Quergewindestange verschiebbar ist, wobei besonders bevorzugt zugleich eine zweite zweiteilige Querstrebe mittels der Quergewindestange bewegbar ist.

Bei dieser Ausführungsform bildet die Querstrebe eine Dreieckform, wobei die Basis bevorzugt parallel zur Brüstungsebene und zu einer Ebene des zu haltenden Elements angeordnet ist und die Schenkel sich über eine Brüstung erstrecken und an deren Spitze der Flansch angeordnet ist. Wird nun die Basis verlängert, verkürzt sich der Abstand des Flanschs zu dem zumindest einen Auflager der Anbindungseinrichtung. Die Verlängerung der Basis wird bevorzugt mittels einer Gewindestange bewerkstelligt. Besonders bevorzugt wird bei einer Mehrzahl von solchen Querstreben die Gewindestange für die Querstreben jeweils gemeinsam genutzt, sodass eine gleichmäßige Anpassung an eine Brüstung ermöglicht ist. Dies ist bevorzugt mittels gegenläufiger Gewinde, zum Beispiel in den dritten Gelenken, umsetzbar. Auch diese Ausführungsform ist ohne Werkzeug an einer Brüstung montierbar. Auch ist eine Selbsthemmung der Vorrichtung möglich. Gemäß einer weiteren vorteilhaften Ausführungsform der oben beschriebenen Haltevorrichtung weist die Haltevorrichtung zumindest eines der folgenden Mittel zum Arretieren der Kontaktstellung auf:
- eine Rastvorrichtung; und
- eine Spannvorrichtung zum Spannen zwischen einer der Querstreben und einer weiteren Komponente der Haltevorrichtung, bevorzugt einer weiteren Querstrebe.

Für viele Anwendungen ist eine zusätzliche Arretierung nicht notwendig. Vielmals wird aber für Sicherheitsvorschriften eine zusätzliche Sicherung gefordert. Die Sicherungsvorrichtungen sind mit den vorangehend beschriebenen Ausführungsformen jeweils kombinierbar. Für eine Schwenkvorrichtung ist beispielsweise eine Sägezahnrastung oder ein Freilauf in Feststellrichtung vorteilhaft, bei dem eine auf einem Umfang angeordnete Zahnpaarung um die Schwenkachse, bevorzugt federnd vorgespannt oder mittels eines Exzenterhebels fixierbar, ineinandergreift und eine Bewegung aus der eingestellten Position behindert oder verhindert. Bei linearen Bewegungen ist eine Zahnstange mit einem relativ dazu bewegbaren vorgespannten Eingriffshebel vorteilhaft.

In einer anderen Variante wird einer der Flansche oder (flanschnah) einer der Querstreben mittels einer Spannvorrichtung, zum Beispiel einem Drahtseil oder einer Gewindestange, in der eingestellten Position gehalten. Die Spannvorrichtung ist bevorzugt die einzige Einrichtung zur Positionierung des jeweiligen Flanschs. In einer bevorzugten Ausführungsform werden die zwei Flansche oder (flanschnah) die zwei Querstreben mittels einer Spannvorrichtung so miteinander verbunden, dass sie nicht mehr ohne Lösen der Spannvorrichtung aus der eingestellten Position herausführbar sind. Gemäß einem weiteren Aspekt der Erfindung wird ein Solarmodul zur Befestigung an einer Brüstung eines Balkons vorgeschlagen, welche zumindest die folgenden Komponenten aufweist:
- zumindest ein Solarelement zur Umwandlung von Sonneneinstrahlung in nutzbare Energie;
- ein Rahmen zum Stabilisieren des Solarelements;
- eine Haltevorrichtung gemäß einer Ausführungsform der obigen Beschreibung zum Halten des Solarelements, wobei bevorzugt die Anbindungseinrichtung einstückig mit dem Rahmen gebildet ist.

Das Solarmodul ist zur Nutzbarmachung von Sonneneinstrahlung für den Menschen eingerichtet, zum Beispiel mittels einer Umwandlung der Sonneneinstrahlung in elektrische Energie oder in Wärme beziehungsweise Warmwasser. Hierzu ist das Solarmodul mit einer möglichst großen Fläche ausgestattet und daher für Wind anfällig. Es muss daher sichergestellt werden, dass das Solarmodul auch bei Sturm an dem vorgesehenen Platz verbleibt und zudem eine möglichst geringe Belastung für eine Brüstung darstellt. Dies wird über eine sichere Verklemmung mittels der Haltevorrichtung in einer der oben beschriebenen Ausführungsformen erreicht. In einer besonders leichten, sicheren und kostengünstigen Ausführungsform ist dabei die Anbindungseinrichtung einstückig mit dem Rahmen des Solarmoduls ausgebildet. Darüber hinaus ist eine besonders flache Ausführungsform ermöglicht, die kostengünstig transportierbar ist.

Die oben beschriebene Erfindung wird nachfolgend vor dem betreffenden technischen Hintergrund unter Bezugnahme auf die zugehörigen Zeichnungen, die bevorzugte Ausgestaltungen zeigen, detailliert erläutert. Die Erfindung wird durch die rein schematischen Zeichnungen in keiner Weise beschränkt, wobei anzumerken ist, dass die Zeichnungen nicht maßhaltig sind und zur Definition von Größenverhältnissen nicht geeignet sind. Es wird dargestellt in
- Fig. 1:: eine Haltevorrichtung an einem Balkon mit massiver Brüstung;
- Fig. 2:: eine Haltevorrichtung mit Solarmodul;
- Fig. 3:: ein schwenkbarer Flansch mit Verdrehsicherung;
- Fig. 4:: ein schwenkbarer Flansch mit Führungskulisse;
- Fig. 5:: ein schwenkbarer Flansch mit Rampenpaarung in einer ersten Stellung;
- Fig. 6:: ein schwenkbarer Flansch mit Rampenpaarung in einer zweiten Stellung;
- Fig. 7:: eine Rampenpaarung in Explosionsdarstellung;
- Fig. 8:: eine Querstrebe mit Schiebeverbindung;
- Fig. 9:: eine Paarung zweiteiliger Querstreben;
- Fig. 10:: eine Querstrebe mit Spannvorrichtung und Rastösen;
- Fig. 11:: eine mehrfach klappbare Querstrebe;
- Fig. 12:: eine isometrische Ansicht einer Querstrebe als Kette;
- Fig. 13:: eine Seitenansicht einer Querstrebe als Kette in einer ersten Stellung;
- Fig. 14:: eine Seitenansicht einer Querstrebe als Kette in einer zweiten Stellung;
- Fig. 15:: eine Seitenansicht einer Querstrebe als Kette in einer dritten Stellung;
- Fig. 16:: eine Haltevorrichtung mit Solarmodul mit Querstreben als Parallelogramm;
- Fig. 17:: eine Haltevorrichtung mit Solarmodul mit um eine Querachse klappbaren Flanschen;
- Fig. 18:: eine mittels eines Schneckentriebs verschwenkbare Querstrebe;
- Fig. 19:: ein Schneckentrieb im Detail; und
- Fig. 20:: eine integral ausgebildete Haltevorrichtung in einem Rahmen eines Solarmoduls.

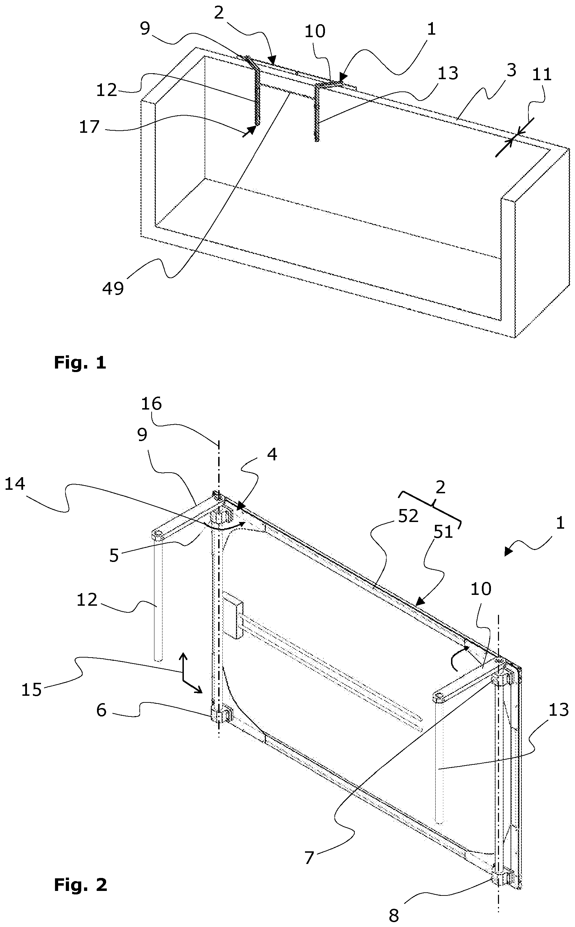

In Fig. 1 ist ein Balkon mit einer massiven Brüstung 3 schematisch dargestellt, an dem ein Solarmodul 2 mittels einer Haltevorrichtung 1 befestigt ist. Die Gewichtskräfte des Solarmoduls 2 werden hauptsächlich von der ersten Querstrebe 9 und der zweiten Querstrebe 10 aufgenommen. Die Haltesicherungskraft, nämlich die Klemmkraft 17, wird von dem ersten Flansch 12 und dem zweiten Flansch 13 als Antagonisten zu dem zumindest einen Auflager (hier durch die Brüstung 3 verdeckt) in die Brüstung 3 eingeleitet. Im vorliegenden Fall sind die Flansche 12 und 13 dazu nach innen geschwenkt. Je nach Brüstungsbreite 11 wird der Schwenkwinkel der Querstreben 9 und 10 festgelegt. Zusätzlich sind die Flansche 12 und 13 mittels der ersten Spannvorrichtung 49 gesichert oder die Klemmkraft 17 wird mittels der ersten Spannvorrichtung 49 erzeugt, wobei die erste Spannvorrichtung 49 beispielsweise eine Gewindestange oder ein Drahtseil mit Spannelement ist.

In Fig. 2 ist eine Haltevorrichtung 1 mit einem Solarmodul 2 gezeigt, welches sich aus einem Solarelement 51, zum Beispiel einer Photovoltaikplatte, und einem Rahmen 52 zusammensetzt, die hier vorliegend integral als Fertigbauteil eingesetzt sind. In einer bevorzugten Ausführungsform wird der Rahmen 51 integral mit der Anbindungseinrichtung 4 gebildet, welche hier mit dem Rahmen 52 verschraubt ist. Die Flansche 12 und 13 sind hier mittels einer Bewegung 14 der jeweiligen Querstreben 9 und 10 um die Achse 16, die vertikal zur Brüstungsebene 15 ausgerichtet ist, hier nach innen mit einer Brüstung 3 (vgl. Fig. 1) verklemmbar. In diesem Beispiel bilden die Drehlager der Querstreben 9 und 10 das erste Auflager 5, das zweite Auflager 6, das dritte Auflager 7 und das vierte Auflager 8.

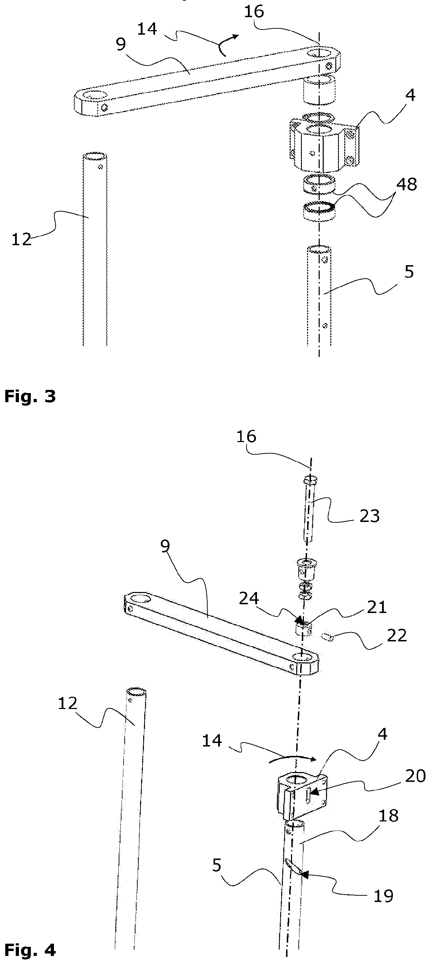

In Fig. 3 ist ein verschwenkbarer Flansch 12 mit einer Querstrebe 9 einer Haltevorrichtung 1, zum Beispiel wie in Fig. 2, gezeigt. Hierbei ist eine Rastvorrichtung 48 mit einer Sägeverzahnung, also als Freilauf, gebildet, welche einen eingestellten Drehwinkel entlang der Bewegung 14 um die Achse 16 sichert.

In Fig. 4 ist eine weitere Variante des verschwenkbaren Flanschs 12 in einer Explosionsdarstellung entlang der Achse 16 gezeigt, bei welchem ein Führungszylinder 18 eine Drehführungsbahn 19 über einen Winkel von etwa 90° aufweist. In dem Führungszylinder 18 ist ein Stellkolben 21 angeordnet, welcher mittels eines, hier stiftförmigen, Führungselements 22 von der Drehführungsbahn 19 geführt wird. Das Führungselement 22 erstreckt sich weiterhin in die Längsführungsbahn 20, die sich hier vertikal also parallel zur Achse 16 über die etwa gleiche Längsausdehnung der Drehführungsbahn 19 erstreckt. Weil die Längsführungsbahn 20 in der Anbindungseinrichtung 4 fixiert ist, ist das Führungselement 22 um die Achse 16 nicht verdrehbar. Demnach dreht sich der Führungszylinder 18 um die Achse 16 und nimmt die drehfest verbundene Querstrebe 9 mit. Zum Auslösen der Bewegung 14 ist eine Gewindestange 23 betätigbar, die mit einem Innengewinde 24 in dem Stellkolben 21 zusammenwirkt. Hier nicht dargestellt, ist bei einer bevorzugten Ausführungsform statt eines Sechskants oder einem anderen Drehmomentkopf der Gewindestange 23, welcher ein Werkzeug benötigt, ein (abnehmbarer) Handknauf vorgesehen.

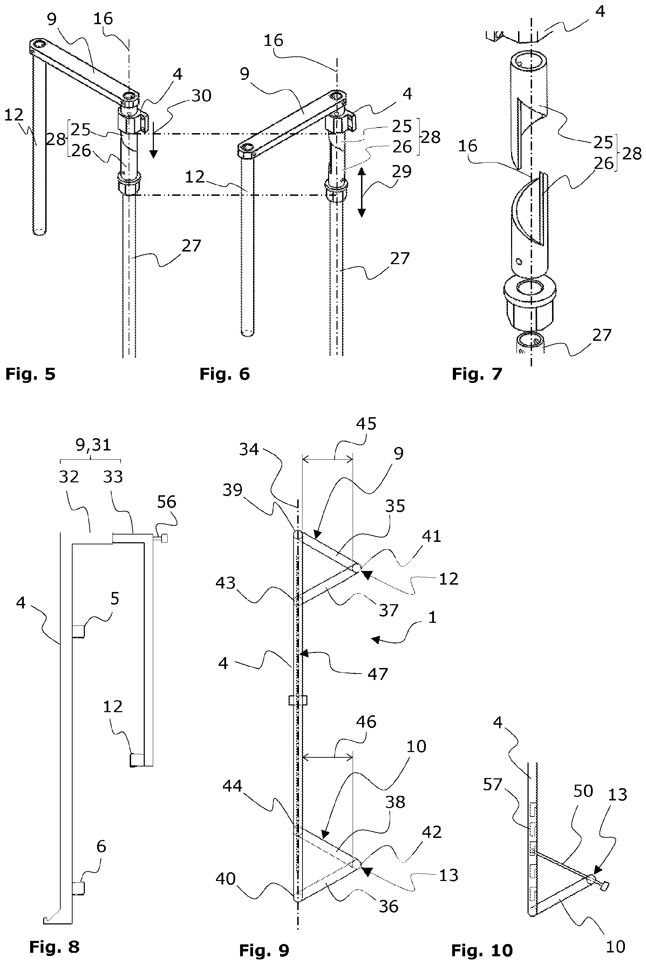

In den Figuren 5 und 6 ist eine ähnliche Konfiguration eines Flanschs 12 und einer Querstrebe 9 wie in Fig. 4 in einer ersten Stellung (Fig. 5) und in einer dazu verdrehten zweiten Stellung (Fig. 6) dargestellt. Eine Rampenpaarung 28 aus einem ersten Rampenelement 25, welches auf einem zweiten Rampenelement 26 angeordnet ist, sorgt für eine Verdrehung um die Achse 16. Entweder wandert das (obere) erste Rampenelement 25 zum Verdrehen auf dem (unteren) zweiten Rampenelement 26, zum Beispiel infolge der Gewichtskraft 30 hinunter, oder wie hier dargestellt wird das (untere) zweite Rampenelement 26 mittels einer (hier nicht dargestellten) Vorspannung in der ersten Stellung gehalten und weicht zur Überführung in die zweite Stellung entlang der axialen Relativbewegung 29 dem verdrehten ersten Rampenelement 25 aus. Die Führungsstange 27 ist verdrehfest mit dem zweiten Rampenelement 26 und der Querstrebe 9 ausgebildet, sodass so der Flansch 12 verdreht wird. In Fig. 7 ist hierzu eine Explosionsdarstellung der Rampenpaarung 28 dargestellt.

In Fig. 8 ist eine Querstrebe 9 in einer Seitenansicht als Schiebeverbindung 31 mit einem ersten Querstrebenabschnitt 32 und einem zweiten Querstrebenabschnitt 33 gezeigt, die mittels der Stellschraube 56 ineinander schiebbar oder auseinander schiebbar sind. Somit werden die Auflager 5 und 6 der Anbindungseinrichtung 4 und der Flansch 12, beziehungsweise das hier bezeichnete Anlageelement, aufeinander zugeführt und eine Klemmkraft 17 ist auf eine Brüstung 3 (vergleiche Fig. 1) aufbringbar.

In Fig. 9 ist eine Haltevorrichtung 1 in Draufsicht zeigt, bei welcher zwei Querstreben 9 und 10 jeweils zweiteilig aus einer äußeren ersten Strebe 35 beziehungsweise 36 und einer inneren zweiten Strebe 37 beziehungsweise 38 vorgesehen sind, die gelenkig mit der Anbindungseinrichtung 4 verbunden sind. Das erste Gelenk 39 beziehungsweise 40 ist unverschiebbar entlang der Querachse 34 mit der Anbindungseinrichtung 4 verbunden. Das dritte Gelenk 43 beziehungsweise 44 ist verschiebbar mit der Anbindungseinrichtung 4 verbunden und hier mittels der Quergewindestange 47 entlang der Querachse 34 verschiebbar. Hierdurch wird der Flansch 12 beziehungsweise 13, welche hier verdeckt unter dem zweiten Gelenk 41 beziehungsweise 42 liegen, hin zu der Anbindungseinrichtung 4 bewegbar, sodass der erste Abstand 45 beziehungsweise der zweite Abstand 46 verkleinerbar ist und so eine Klemmkraft 17 auf eine Brüstung 3 aufbringbar ist (vergleiche Fig. 1). In diesem Beispiel sind die Querstreben 9 und 10, beziehungsweise die ersten Streben 35 und 36 sowie die zweiten Streben 37 und 38, synchron mittels der gemeinsamen Quergewindestange 47 bewegbar.

In Fig. 10 ist eine einfache Variante gezeigt, bei welcher ein Flansch 13 mittels einer zweiten Spannvorrichtung 50 , welche in eine Rastöse 57 in der Anbindungseinrichtung 4 einhakbar ist, mit einer Brüstung 3 (vergleiche Fig. 1) verspannbar ist.

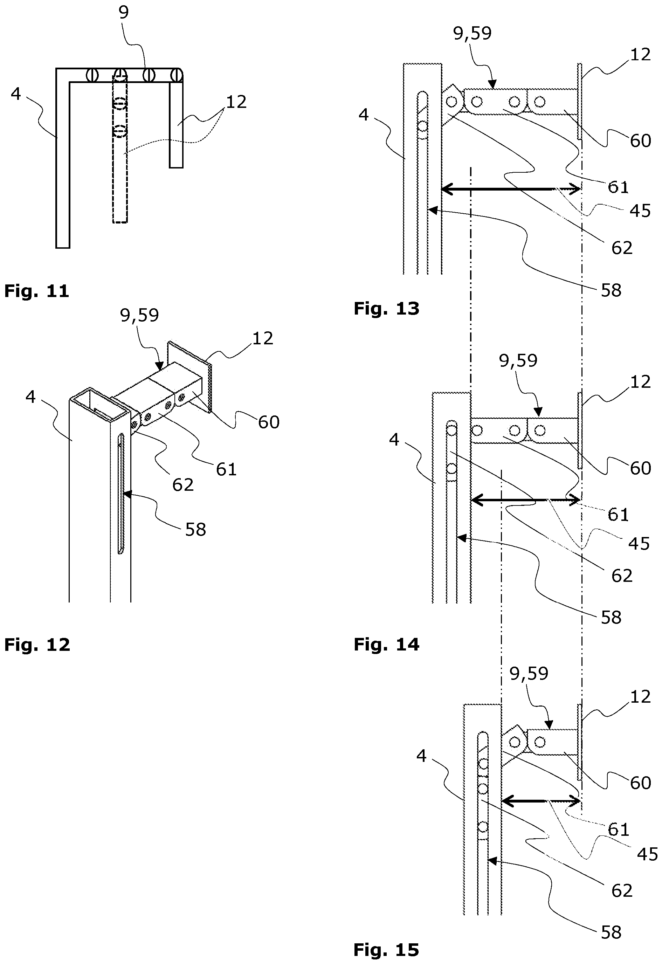

In Fig. 11 ist eine mehrfach klappbare Querstrebe 9 gezeigt, wodurch ein Flansch 12 in Zusammenwirken mit der Anbindungseinrichtung 4 eine Klemmkraft auf eine Brüstung 3 (vergleiche Fig. 1) ausüben kann. Eventuell sind hierzu weitere Spannelemente vorgesehen.

In den Figuren 12 bis 15 ist eine Querstrebe 9 als Kette 59 ausgeführt und in verschiedenen Stellungen gezeigt. Der Flansch 12 ist hierbei nur als Platzhalter gezeichnet und ist zum Beispiel sowohl als Hakenelement für einen Brüstungshaken oder als Haken der Anbindungseinrichtung 4 (nicht dargestellt) als auch als Befestigungselement an einem Bodensegment ausführbar. Das erste Einzelglied 60, das zweite Einzelglied 61 und das dritte Einzelglied 62, die hier dargestellt sind (es sind auch mehr Einzelglieder möglich), sind über eine Führungsschiene 58 mittels nicht dargestellter Kettenbolzen führbar. Der Abstand 45 ist hiermit stufenlos oder diskret einstellbar.

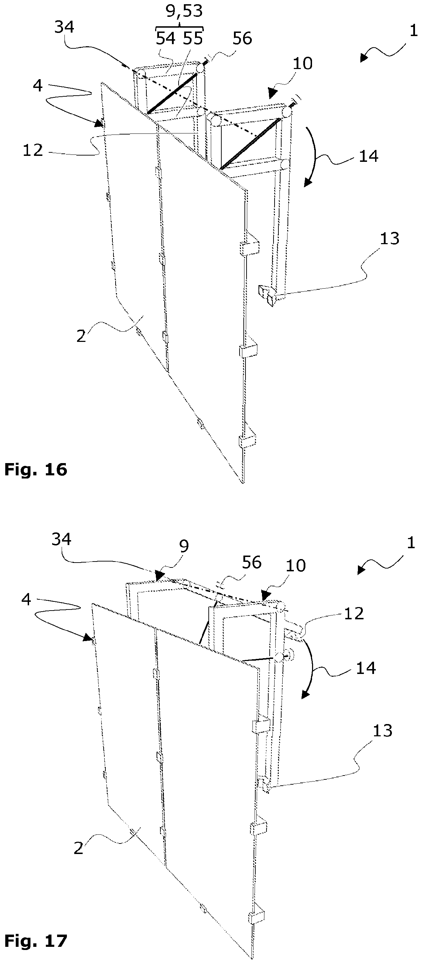

In Fig. 16 ist eine weitere Variante einer Haltevorrichtung 1 gezeigt, bei der die Querstreben 9 und 10 als Parallelogramme 53 ausgeführt sind (hier ist nur die erste Querstrebe 9 mit detaillierten Bezugszeichen versehen und die zweite Querstrebe 10 gleich aufgebaut). Das (hier zweiteilige) Solarmodul 2 wird hier mittels Hakenelementen der Anbindungseinrichtung 4 eingehängt. Die Flansche 12 und 13 sind mittels einer Bewegung 14 infolge einer Parallelverkippung der ersten Parallelstrebe 54 und der zweiten Parallelstrebe 55 hin zur Anbindungseinrichtung um die Querachse 34 bewegbar. Diese Bewegung 14 ist hierbei individuell mittels der jeweiligen Stellschraube 56 einstellbar.

In Fig. 17 ist eine weitere Variante der Haltevorrichtung 1 ähnlich wie in Fig. 16 gezeigt, bei der die Querstreben 9 und 10 starr mit der Anbindungseinrichtung 4 verbunden. Die Flansche 12 und 13 sind um eine Querachse 34 verkippbar und sind somit mit einer Brüstung 3 (vergleiche Fig. 1) in kraftübertragenden Kontakt bringbar. Die entsprechende Klemmkraft 17 wird hierbei über die Stellschraube 56, die hier auch ein Spannelement ist, aufgebracht.

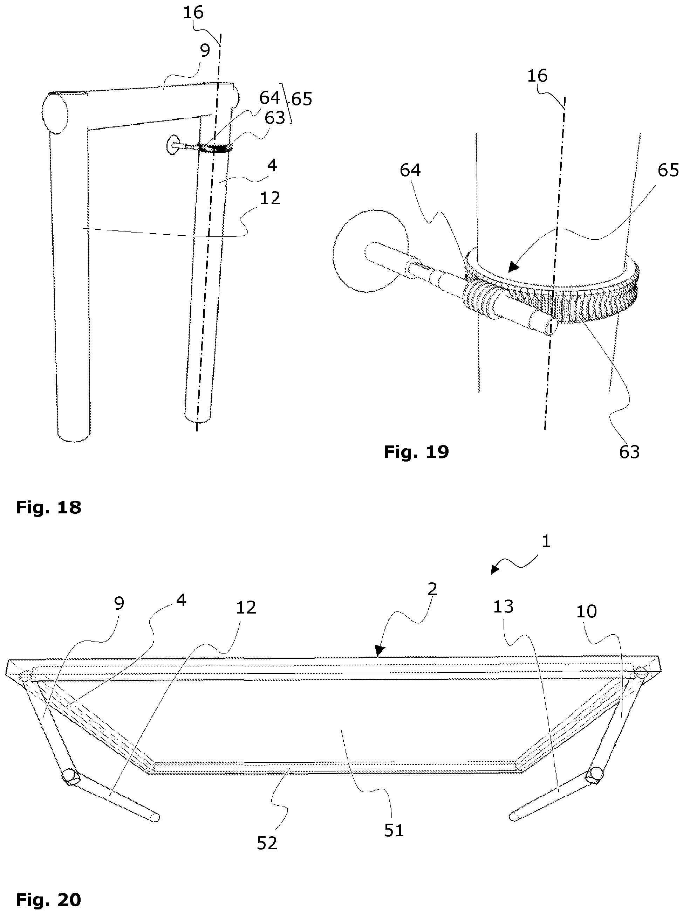

In Fig. 18 ist eine mittels eines Schneckentriebs 65 verschwenkbare Querstrebe 9 mit einem Flansch 12 gezeigt. Die Zahnradverzahnung 63 ist dabei außen an einem um die Achse 16 drehbares Element der Anbindung 4 angeordnet. Die Gewindeschnecke 64 ist gegen Verdrehen fixiert und treibt den Schneckentrieb 65 an, sodass die Querstrebe 9 um die Achse 16 verschwenkt wird.

In Fig. 19 ist der Schneckentrieb 65 von Fig. 18 im Detail dargestellt, wobei hier ein vorteilhafte selbsthemmende Zahnradverzahnung 63 gewählt ist.

In Fig. 20 ist ein integral ausgebildete Haltevorrichtung 1 in einem Rahmen 52 eines Solarmoduls 2 mit einem Solarelement 51 gezeigt. Die Anbindungseinrichtung 4 ist hierbei im Rahmen 52 angeordnet. Somit ist diese Ausführungsform besonders flach gestaltbar.

Mit der hier dargestellten Erfindung wird eine Haltevorrichtung mit großer Flexibilität in Hinsicht auf die Beschaffenheit einer Balkonbrüstung vorgeschlagen.

**Bezugszeichenliste**

| | | | |
|---|---|---|---|
| 1 | Haltevorrichtung | 36 | erste Strebe der zweiten Querstrebe |
| 2 | Solarmodul | 37 | zweite Strebe der ersten Querstrebe |
| 3 | Brüstung | 38 | zweite Strebe der zweiten Querstrebe |
| 4 | Anbindungseinrichtung | 39 | erstes Gelenk der ersten Querstrebe |
| 5 | erstes Auflager | 40 | erstes Gelenk der zweiten Querstrebe |
| 6 | zweites Auflager | 41 | zweites Gelenk der ersten Querstrebe |
| 7 | drittes Auflager | 42 | zweites Gelenk der zweiten Querstrebe |
| 8 | viertes Auflager | 43 | drittes Gelenk der ersten Querstrebe |
| 9 | erste Querstrebe | 44 | drittes Gelenk der zweiten Querstrebe |
| 10 | zweite Querstrebe | 45 | erster Abstand |
| 11 | Brüstungsbreite | 46 | zweiter Abstand |
| 12 | erster Flansch | 47 | Quergewindestange |
| 13 | zweiter Flansch | 48 | Rastvorrichtung |
| 14 | Bewegung | 49 | erste Spannvorrichtung |
| 15 | Brüstungsebene | 50 | zweite Spannvorrichtung |
| 16 | Achse | 51 | Solarelement |
| 17 | Klemmkraft | 52 | Rahmen |
| 18 | Führungszylinder | 53 | Parallelogramm |
| 19 | Drehführungsbahn | 54 | erste Parallelstrebe |
| 20 | Längsführungsbahn | 55 | zweite Parallelstrebe |
| 21 | Stellkolben | 56 | Stellschraube |
| 22 | Führungselement | 57 | Rastöse |
| 23 | Gewindestange | 58 | Führungsschiene |
| 24 | Innengewinde | 59 | Kette |
| 25 | erstes Rampenelement | 60 | erstes Einzelglied |
| 26 | zweites Rampenelement | 61 | zweites Einzelglied |
| 27 | Führungsstange | 62 | drittes Einzelglied |
| 28 | Rampenpaarung | 63 | Zahnradverzahnung |
| 29 | axiale Relativbewegung | 64 | Gewindeschnecke |
| 30 | Gewichtskraft | 65 | Schneckentrieb |
| 31 | Schiebeverbindung | | |
| 32 | erster Querstrebenabschnitt | | |
| 33 | zweiter Querstrebenabschnitt | | |
| 34 | Querachse | | |
| 35 | erste Strebe der ersten Querstrebe | | |

## Patentansprüche

1. Haltevorrichtung (1) für ein Solarmodul (2) an einer Brüstung (3) eines Balkons aufweisend zumindest die folgenden Komponenten:
- eine Anbindungseinrichtung (4) zum Anbinden eines zu haltenden Elements (2), wobei die Anbindungseinrichtung (4) zumindest ein Auflager (5,6,7,8) zur Anlage an einer Brüstung (3) aufweist; und
- zwei Querstreben (9,10) zum Überbrücken einer Brüstungsbreite (11), wobei die zwei Querstreben (9,10) mit der Anbindungseinrichtung (4) verbunden sind und jeweils einen Flansch (12,13) zur Anlage an einer Brüstung (3) aufweisen,
wobei mittels einer Bewegung (14) des jeweiligen Flanschs (12,13) hin zur Anbindungseinrichtung (4) der jeweilige Flansch (12,13) und das zumindest eine Auflager (5,6,7,8) einander entgegengesetzt gegen die Brüstung (3) drücken, **dadurch gekennzeichnet, dass**
die zwei Querstreben (9,10) um jeweils eine zur Brüstungsebene (15) einer Brüstung (3) parallele Achse (16) schwenkbar sind, wobei die parallelen Achsen zueinander lateral beabstandet sind.

2. Haltevorrichtung (1) nach Anspruch 1, wobei mittels des jeweiligen Flanschs (12,13) im Zusammenwirken mit dem zumindest einen Auflager (5,6,7,8) eine Klemmkraft (17) auf die Brüstung (3) aufbringbar ist.

3. Haltevorrichtung (1) nach Anspruch 2, wobei zum Schwenken der zwei Querstreben (9,10) je Querstrebe (9,10) zumindest die folgenden Komponenten vorgesehen sind:
- ein Führungszylinder (18) konzentrisch zu der jeweiligen Achse (16) und mit einer Drehführungsbahn (19), wobei sich die Drehführungsbahn (19) über einen Winkelbereich von 45°, bis 90°, bevorzugt 85°, und über einen Längsabschnitt axial erstreckt, wobei die zugehörige Querstrebe (9, 10) mit dem Führungszylinder (18) drehfest verbunden ist;
- eine Längsführungsbahn (20), welche in der Anbindungseinrichtung (4) gebildet ist, wobei sich die Längsführungsbahn (20) über den Längsabschnitt axial erstreckt; und
- ein Stellkolben (21) mit einem Führungselement (22), wobei sich das Führungselement (22) in die Drehführungsbahn (19) und in die Längsführungsbahn (20) erstreckt und so eine Bewegung (14) des Stellkolbens (21) beschränkt,
wobei mittels einer axialen Bewegung (14) des Stellkolbens (21) der Führungszylinder (18) relativ zur Anbindungseinrichtung (4) verdrehbar ist.

4. Haltevorrichtung (1) nach Anspruch 3, wobei im Führungszylinder (18) eine Gewindestange (23) angeordnet ist und der Stellkolben (21) ein Innengewinde (24) aufweist und der Stellkolben (21) mittels Verdrehens der Gewindestange (23) axial verschiebbar ist.

5. Haltevorrichtung (1) nach Anspruch 2, wobei zum Schwenken der zwei Querstreben (9,10) je Querstrebe (9,10) zumindest die folgenden Komponenten vorgesehen sind:
- ein erstes Rampenelement (25) an der Anbindungseinrichtung (4);
- eine Führungsstange (27) konzentrisch zu der Achse (16), wobei die Führungsstange (27) drehfest mit der jeweiligen Querstrebe (9, 10) verbunden ist; und
- ein mit dem ersten Rampenelement (25) korrespondierendes zweites Rampenelement (26), wobei das zweite Rampenelement (26) drehfest mit der Führungsstange (27) verbunden ist und wobei das erste Rampenelement (25) und das zweite Rampenelement (26) eine aufeinanderliegende Rampenpaarung (28) bilden,
wobei mittels einer axialen Relativbewegung (29) zwischen dem ersten Rampenelement (25) und dem zweiten Rampenelement (26) die Führungsstange (27) um die jeweilige Achse (16) mittels der aufeinanderliegenden Rampenpaarung (28) verdrehbar ist, wobei die axiale Relativbewegung (29) bevorzugt beim Anbringen an einer Brüstung (3) mittels einer Gewichtskraft (30) des Anbindungselements (4) und/oder des zu haltenden Elements (2) ausgelöst wird.

6. Haltevorrichtung (1) nach Anspruch 2, wobei die zwei Querstreben (9, 10) mittels einer Zahnradverzahnung (63) im Zusammenspiel mit einer Gewindeschnecke (64) verschwenkbar sind.

7. Haltevorrichtung (1) nach Anspruch 1, wobei die zwei Querstreben (9,10) zumindest eine der folgenden Eigenschaften aufweisen, mittels derer die zwei Querstreben (9,10) eine veränderbare Länge aufweisen:
- eine längenjustierbare Schiebeverbindung (31) zwischen einem ersten Querstrebenabschnitt (32) und einem zweiten Querstrebenabschnitt (33);
- eine um eine Querachse (34), welche zu einer Brüstung (3) parallel ausgerichtet ist, mehrfach klappbare mehrteilige Querstrebe (9,10);
- eine Querstrebe (9) als Kette (59), die nach Längenbedarf ausziehbar und zu der Anbindungseinrichtung (4) arretierbar ist; und
- ein Parallelogramm (53) aus einer ersten Parallelstrebe (54) und einer zweiten Parallelstrebe (55), die um eine Querachse (34), welche zu einer Brüstung (3) parallel ausgerichtet ist, parallel verschwenkbar sind.

8. Haltevorrichtung (1) nach Anspruch 2, wobei die zwei Querstreben (9,10) sich zweiteilig aus einer ersten Strebe (35,36) und einer zweiten Strebe (37,38) gelenkig zusammensetzen, wobei ein erstes Gelenk (39,40) der ersten Strebe (35.36) und ein drittes Gelenk (43,44) der zweiten Strebe (37,38) mit der Anbindungseinrichtung (4) verbindbar ist und wobei ein zweites Gelenk (41,42) mit dem jeweiligen Flansch (12,13) verbindbar ist, wobei das zweite Gelenk (41,42) mittels Verändern eines Abstands (45,46) zwischen dem ersten Gelenk (39,40) und dem dritten Gelenk (43,44) relativ zur Anbindungseinrichtung (4) bewegbar ist, wobei bevorzugt das dritte Gelenk (43,44) mittels einer Quergewindestange (47) verschiebbar ist, wobei besonders bevorzugt zugleich die weitere zweiteilige Querstrebe (10) mittels der Quergewindestange (47) bewegbar ist.

9. Haltevorrichtung (1) nach einem der vorhergehenden Ansprüche, wobei die Haltevorrichtung (1) zumindest eines der folgenden Mittel zum Arretieren der Kontaktstellung aufweist:
- eine Rastvorrichtung (48); und
- eine Spannvorrichtung (49,50) zum Spannen zwischen einer der zwei Querstreben (9,10) und einer weiteren Komponente der Haltevorrichtung (1), bevorzugt der weiteren Querstrebe (10, 9).

10. Solarmodul (2) zur Befestigung an einer Brüstung (3) eines Balkons, aufweisend zumindest die folgenden Komponenten:
- zumindest ein Solarelement (51) zur Umwandlung von Sonneneinstrahlung in nutzbare Energie;
- ein Rahmen (52) zum Stabilisieren des Solarelements (51); und
- eine Haltevorrichtung (1) nach einem der vorhergehenden Ansprüche zum Halten des Solarelements (51), wobei bevorzugt die Anbindungseinrichtung (4) einstückig mit dem Rahmen (52) gebildet ist.

## Claims

1. A holding device (1) for a solar panel (2) on a parapet (3) of a balcony, comprising at least the following components:
- a fastening apparatus (4) for fastening an element (2) to be held, the fastening apparatus (4) comprising at least one support (5,6,7,8) for abutment against a parapet (3); and
- two cross struts (9,10) for spanning a parapet width (11), the two struts (9,10) being connected to the fastening apparatus (4) and each comprising a flange (12,13) for abutment against a parapet (3),
the relevant flange (12,13) and the at least one support (5,6,7,8) being pressed against the parapet (3) in opposite directions by means of a movement (14) of the relevant flange (12,13) towards the fastening apparatus (4), **characterized in that**
the two cross struts (9,10) can be pivoted about one axis (16) each that is in parallel with the parapet plane (15) of a parapet (3), the parallel axes being laterally spaced apart from one another.

2. The holding device (1) according to claim 1, wherein a clamping force (17) can be applied to the parapet (3) by means of the relevant flange (12,13) in cooperation with the at least one support (5,6,7,8).

3. The holding device (1) according to claim 2, wherein at least the following components are provided for each cross strut (9,10) for pivoting the two cross struts (9,10):
- a guide cylinder (18) that is concentric with respect to the relevant axis (16) and comprising a rotary guide track (19), wherein the rotary guide track (19) extends over an angular range of 45°, up to 90°, preferably 85°, and axially over a longitudinal portion, wherein the associated cross strut (9, 10) is non-rotationally connected to the guide cylinder (18);
- a longitudinal guide track (20), which is formed in the fastening apparatus (4), wherein the longitudinal guide track (20) extends axially over the longitudinal portion; and
- an adjusting piston (21) comprising a guide element (22), wherein the guide element (22) extends into the rotary guide track (19) and into the longitudinal guide track (20) and thus limits a movement (14) of the adjusting piston (21),
wherein the guide cylinder (18) can be turned relative to the fastening apparatus (4) by means of an axial movement (14) of the adjusting piston (21).

4. The holding device (1) according to claim 3, wherein a threaded rod (23) is arranged in the guide cylinder (18) and the adjusting piston (21) comprises an internal thread (24) and the adjusting piston (21) can be shifted axially by turning the threaded rod (23).

5. The holding device (1) according to claim 2, wherein at least the following components are provided for each cross strut (9,10) for pivoting the two cross struts (9,10):
- a first ramp element (25) on the fastening apparatus (4);
- a guide rod (27) that is concentric with respect to the axis (16), wherein the guide rod (27) is non-rotationally connected to the relevant cross strut (9, 10); and
- a second ramp element (26) that corresponds to the first ramp element (25), wherein the second ramp element (26) is non-rotationally connected to the guide rod (27) and wherein the first ramp element (25) and the second ramp element (26) rest one on top of the other to form a ramp pair (28),
wherein the guide rod (27) can be turned about the relevant axis (16) by means of the ramp pair (28) by means of a relative axial movement (29) between the first ramp element (25) and the second ramp element (26), wherein the relative axial movement (29) is preferably triggered during fastening to a parapet (3) by means of a weight force (30) of the fastening element (4) and/or the element (2) to be held.

6. The holding device (1) according to claim 2, wherein the two cross struts (9, 10) can be pivoted by means of gear teeth (63) in cooperation with a threaded worm (64).

7. The holding device (1) according to claim 1, wherein the two cross struts (9,10) have at least one of the following characteristics, by means of which the two cross struts (9,10) have a variable length:
- a length-adjustable sliding connection (31) between a first cross strut portion (32) and a second cross strut portion (33);
- a multi-part cross strut (9,10) that can be folded several times about a transverse axis (34), which is oriented in parallel with a parapet (3);
- a cross strut (9) as a chain (59), which can be extended depending on the length required and can be locked to the fastening apparatus (4); and
- a parallelogram (53) consisting of a first parallel strut (54) and a second parallel strut (55), which can be pivoted in parallel about a transverse axis (34), which is oriented in parallel with a parapet (3).

8. The holding device (1) according to claim 2, wherein the two cross struts (9,10) are two-part and articulated and are composed of a first strut (35,36) and a second strut (37,38), wherein a first joint (39,40) of the first strut (35.36) and a third joint (43,44) of the second strut (37,38) can be connected to the fastening apparatus (4) and wherein a second joint (41,42) can be connected to the relevant flange (12,13), wherein the second joint (41,42) can be moved relative to the fastening apparatus (4) by altering the distance (45,46) between the first joint (39,40) and the third joint (43,44), wherein the third joint (43,44) can preferably be shifted by means of a threaded cross rod (47), wherein the other two-part cross strut (10) can particularly preferably be moved at the same time by means of the threaded cross rod (47).

9. The holding device (1) according to any one of the preceding claims, wherein the holding device (1) comprises at least one of the following means for locking the contact position:
- a latching device (48); and
- a tensioning device (49,50) for tensioning between one of the two cross struts (9,10) and another component of the holding device (1), preferably the other cross strut (10, 9).

10. A solar panel (2) to be secured to a parapet (3) of a balcony, comprising at least the following components:
- at least one solar element (51) for converting solar radiation into usable energy;
- a frame (52) for stabilizing the solar element (51); and
- a holding device (1) according to any one of the preceding claims for holding the solar element (51), wherein the fastening apparatus (4) is preferably integrally formed with the frame (52).

## Revendications

1. Dispositif de maintien (1) pour un module solaire (2) placé sur une balustrade (3) de balcon, présentant au moins les composants suivants :
- une fixation (4) pour attacher un élément à maintenir (2), dans lequel la fixation (4) comporte au moins un appui (5, 6, 7, 8) à installer sur une balustrade (3) ; et
- deux traverses (9, 10) pour couvrir une largeur de balustrade (11), dans lequel les deux traverses (9, 10) sont reliées par la fixation (4) et présentent chacune une bride (12, 13) à installer sur une balustrade (3),
dans lequel la bride respective (12, 13) et au moins l'un des appuis (5, 6, 7, 8) pressent mutuellement contre la balustrade (3) dans un sens opposé moyennant un déplacement (14) de la bride respective (12, 13) en direction de la fixation (4), **caractérisé en ce que**
les deux traverses (9, 10) peuvent pivoter autour respectivement d'un axe (16) parallèle au plan (15) d'une balustrade (3), dans lequel les axes parallèles sont espacés latéralement l'un par rapport à l'autre.

2. Dispositif de maintien (1) selon la revendication 1, dans lequel une force de serrage (17) est applicable sur la balustrade (3) au moyen de la bride respective (12, 13) en interaction avec au moins l'un des appuis (5, 6, 7, 8).

3. Dispositif de maintien (1) selon la revendication 2, dans lequel au moins les composants suivants sont prévus pour chaque traverse (9, 10) afin de faire pivoter les deux traverses (9, 10) :
- un vérin de guidage (18) concentrique par rapport à l'axe respectif (16) et doté d'une voie de guidage en rotation (19), dans lequel la voie de guidage en rotation (19) s'étend axialement sur une plage angulaire de 45°, jusqu'à 90°, de préférence 85°, et sur un tronçon longitudinal, dans lequel la traverse (9, 10) associée est reliée de façon solidaire en rotation au vérin de guidage (18);
- une voie de guidage longitudinale (20), laquelle est formée à l'intérieur de la fixation (4), dans lequel la voie de guidage longitudinale (20) s'étend axialement sur un tronçon longitudinal ; et
- un piston de réglage (21) doté d'un élément de guidage (22), dans lequel l'élément de guidage (22) s'étend à l'intérieur de la voie de guidage en rotation (19) et de la voie de guidage longitudinale (20) et limite ainsi un déplacement (14) du piston de réglage (21),
dans lequel le vérin de guidage (18) peut pivoter par rapport à la fixation (4) moyennant un déplacement axial (14) du piston de réglage (21).

4. Dispositif de maintien (1) selon la revendication 3, dans lequel une tige filetée (23) est disposée à l'intérieur du vérin de guidage (18) et le piston de réglage (21) présente un filetage intérieur (24) et le piston de réglage (21) est ajustable axialement moyennant la rotation de la tige filetée (23).

5. Dispositif de maintien (1) selon la revendication 2, dans lequel au moins les composants suivants sont prévus pour chaque traverse (9, 10) afin de faire pivoter les deux traverses (9, 10) :
- un premier élément de rampe (25) sur la fixation (4) ;
- une tige de guidage (27) concentrique par rapport à l'axe (16), dans lequel la tige de guidage (27) est reliée de façon solidaire en rotation à la traverse (9, 10) respective ; et
- un second élément de rampe (26) correspondant au premier élément de rampe (25), dans lequel le second élément de rampe (26) est relié de façon solidaire en rotation à la tige de guidage (27) et dans lequel le premier élément de rampe (25) et le second élément de rampe (26) forment un couple de rampes (28) superposées,
dans lequel la tige de guidage (27) peut pivoter autour de l'axe respectif (16) à l'aide du couple de rampes (28) superposées moyennant un déplacement relatif axial (29) entre le premier élément de rampe (25) et le second élément de rampe (26), dans lequel le déplacement relatif axial (29) est déclenché de préférence lors de la mise en place sur une balustrade (3) moyennant une force pondérale (30) de la fixation (4) et/ou de l'élément (2) à maintenir.

6. Dispositif de maintien (1) selon la revendication 2, dans lequel les deux traverses (9, 10) peuvent pivoter au moyen d'une denture d'engrenage (63) en interaction avec une vis sans fin (64).

7. Dispositif de maintien (1) selon la revendication 1, dans lequel les deux traverses (9, 10) possèdent au moins l'une des propriétés suivantes, de par lesquelles les deux traverses (9, 10) présentent une longueur variable :
- une liaison coulissante (31) ajustable en longueur entre un premier tronçon de traverse (32) et un second tronçon de traverse (33) ;
- une traverse (9, 10) à parties multiples, pliable plusieurs fois autour d'un axe transversal (34), lequel est orienté parallèlement à une balustrade (3) ;
- une traverse (9) sous la forme d'une chaîne (59), qui est extensible selon la longueur requise et peut être bloquée par rapport à la fixation (4) ; et
- un parallélogramme (53) constitué d'une première entretoise parallèle (54) et d'une seconde entretoise parallèle (55), qui peuvent pivoter parallèlement autour d'un axe transversal (34), lequel est orienté parallèlement à une balustrade (3).

8. Dispositif de maintien (1) selon la revendication 2, dans lequel les deux traverses (9, 10) s'assemblent de manière articulée en deux parties constituées d'une première entretoise (35, 36) et d'une seconde entretoise (37, 38), dans lequel une première articulation (39, 40) de la première entretoise (35. 36) et une troisième articulation (43, 44) de la seconde entretoise (37, 38) peuvent être reliées à la fixation (4) et dans lequel une deuxième articulation (41, 42) peut être reliée à la bride respective (12, 13), dans lequel la deuxième articulation (41, 42) est déplaçable par rapport à la fixation (4) moyennant la variation d'une distance (45, 46) entre la première articulation (39, 40) et la troisième articulation (43, 44), dans lequel de préférence la troisième articulation (43, 44) est ajustable au moyen d'une tige filetée transversale (47), dans lequel encore mieux l'autre traverse (10) en deux parties est déplaçable en même temps au moyen de la tige filetée transversale (47).

9. Dispositif de maintien (1) selon l'une des revendications précédentes, dans lequel le dispositif de maintien (1) présente au moins l'un des moyens suivants pour bloquer la position de contact :
- un dispositif d'encliquetage (48) ; et
- un dispositif de serrage (49, 50) à brider entre l'une des deux traverses (9, 10) et un autre composant du dispositif de maintien (1), de préférence l'autre traverse (10, 9).

10. Module solaire (2) à fixer sur une balustrade (3) de balcon présentant au moins les composants suivants :
- au moins un élément solaire (51) pour convertir le rayonnement solaire en énergie utilisable ;
- un cadre (52) pour stabiliser l'élément solaire (51) ; et
- un dispositif de maintien (1) selon l'une des revendications précédentes pour maintenir l'élément solaire (51), dans lequel la fixation (4) est formée de préférence d'un seul tenant avec le cadre (52).
